# EUROPÄISCHE PATENTANMELDUNG

(11) **EP 4 803 872 A1**
(43) Veröffentlichungstag der Anmeldung: **09.09.2026**
(21) Anmeldenummer: 26159717.3
(22) Anmeldetag: 20.02.2026
(51) Int. Cl.: G01M 3/02, G01N 3/12

(54) **PRÜFSTAND MIT EINER SCHNELLSPANNEINHEIT**

(30) Priorität: 03.03.2025 DE 102025107981
(71) Anmelder: Uniflex-Hydraulik GmbH, 61184 Karben (DE)
(72) Erfinder: Schnell, David, 61184 Karben (DE)
(74) Vertreter: Grättinger Möhring von Poschinger Patentanwälte Partnerschaft mbB

(57) **Zusammenfassung**

Die vorliegende Erfindung betrifft einen Prüfstand mit einer Schnellspanneinheit (3, 3.1) zur Druckprüfung einer Leitung (8), wobei die Schnellspanneinheit (3) einen Spannkopf (10) und einen gegenüber dem Spannkopf (10) entlang einer Spannachse (11) verschiebbaren Gleitarm (12) mit einer Anschlussaufnahme (13) umfasst, sodass ein Anschluss (14) der zu prüfenden Leitung (8) zwischen dem Spannkopf (10) und der Anschlussaufnahme (13) einspannbar ist. Der Spannkopf (10) weist einen Grundkörper (15), einen Prüfadapter (16) und eine Spannvorrichtung (17) auf, durch deren Betätigung der Prüfadapter (16) gegenüber dem Grundkörper (15) parallel zur Spannachse (11) bewegbar ist. Der Gleitarm (12) weist eine Gleitschiene (26) auf, die einerseits innerhalb einer korrespondierenden Gleitschienenführung (27) des Grundkörpers (15) entlang der Spannachse (11) bewegbar ist, und die andererseits durch Verdrehung relativ zur Spannachse (11) in der Gleitschienenführung (27) verkantbar und somit gegenüber dem Grundkörper (15) fixierbar ist. Der Prüfadapter (16) und die Gleitschiene (26) sind senkrecht zur Spannachse (11) voneinander beabstandet angeordnet.

## Beschreibung

Die vorliegende Erfindung betrifft einen Prüfstand mit einer Schnellspanneinheit zur Druckprüfung einer Leitung, insbesondere einer Hydraulikleitung.

Derartige Prüfstände für (Hydraulik-)Leitungen spielen eine zentrale Rolle bei der Qualitätsprüfung von (Hydraulik-)Leitungen und dienen dazu, die Zuverlässigkeit und Sicherheit der Leitungen unter realistischen Betriebsbedingungen zu prüfen.

Hierzu werden typischerweise Belastungstests unter hohem Druck, variierenden Temperaturen und/oder pulsierenden Belastungen durchgeführt, um sicherzustellen, dass die Leitungen den Anforderungen in sicherheitskritischen Anwendungen, beispielsweise in der Luftfahrt, dem Maschinenbau oder der Fahrzeugindustrie, standhalten.

Insbesondere wenn viele Hydraulikleitungen in kurzer Zeit zu prüfen sind, spielt die einfache Handhabung und der schnelle Wechsel der zu prüfenden Leitungen eine wesentliche Rolle, da langwierige und komplizierte Rüstprozesse zu Fehlern und erhöhten Kosten führen können.

Vor diesem Hintergrund kommen häufig Schnellspannsysteme zum Einsatz, um die zu prüfende Leitung über ihre Anschlüsse während der Prüfung mit dem Prüfstand zu verbinden.

Ein Schnellspannsystem zeichnet sich dabei dadurch aus, dass es den oder die Anschlüsse der zu prüfenden Leitung mechanisch am Prüfstand fixiert und gleichzeitig eine schnelle, einfache und sichere Handhabung ermöglicht. Dabei erfolgt die Befestigung (Fixierung) typischerweise werkzeuglos mittels Hebelmechanismen, Klemmbacken oder Spindeltrieben, pneumatischer oder hydraulischer Aktuatoren oder vergleichbarer Spannvorrichtungen, die an einem Anschluss der Leitung angreifen.

Aus dem reichen Fundus des bekannten Standes der Technik sei beispielhaft auf die CN 221485006 U sowie die CN 214503182 U verwiesen. Beide Veröffentlichungen zeigen einen Prüfstand mit einer Schnellspannvorrichtung zur Druckprüfung einer Hydraulikleitung. Bei der CN 221485006 U wird die Schnellspannvorrichtung dabei mittels eines Spindelmechanismus an einem Anschluss der Hydraulikleitung fixiert, bei der CN 214503182 U mittels eines hydraulischen Aktuators.

Das deutsche Patent DE 30 09 168 C2 beschreibt eine Vorrichtung zum Druckprüfen von Schlauchleitungen, bei der ein Dorn mittels einer Betätigungsspindel und zweier paralleler Führungsstangen an der zu prüfenden Schlauchleitung fixiert werden kann. Im chinesischen Gebrauchsmuster CN218470406U wird ein Prüfstand zur Druckprüfung einer Leitung offenbart, bei dem die zu prüfende Leitung mittels eines Linearaktuators und zweier paralleler Führungsstangen eingespannt werden kann.

Der vorliegenden Erfindung liegt vor diesem Hintergrund die Aufgabe zugrunde, einen Prüfstand mit einer Schnellspanneinheit bereitzustellen, der sich durch verbesserte Praxistauglichkeit auszeichnet, insbesondere im Hinblick auf die einfache Handhabung, den schnellen Wechsel von zu prüfenden Leitungen sowie eine hohe Zuverlässigkeit und Sicherheit.

Gelöst wird diese Aufgabe durch den Prüfstand mit einer Schnellspanneinheit gemäß Anspruch 1. Bevorzugte Ausführungsformen sind in den Unteransprüchen angegeben.

Der erfindungsgemäße Prüfstand mit einer Schnellspanneinheit zur Druckprüfung einer Hydraulikleitung zeichnet sich dadurch aus, dass
- die Schnellspanneinheit einen Spannkopf und einen gegenüber dem Schnellspannkopf entlang einer Spannachse verschiebbaren Gleitarm mit einer Anschlussaufnahme umfasst, sodass ein Anschluss der zu prüfenden Leitung zwischen dem Spannkopf und der Anschlussaufnahme einspannbar ist,
- der Spannkopf einen Grundkörper, einen Prüfadapter und eine Spannvorrichtung aufweist, durch deren Betätigung der Prüfadapter gegenüber dem Grundkörper parallel zur Spannachse bewegbar ist,
- der Gleitarm eine Gleitschiene aufweist, die einerseits innerhalb einer korrespondierenden Gleitschienenführung des Grundkörpers entlang der Spannachse bewegbar ist, und die andererseits durch Verdrehung relativ zur Spannachse in der Gleitschienenführung verkantbar und somit (durch Selbsthemmung) gegenüber dem Grundkörper fixierbar ist, und
- der Prüfadapter und die Gleitschiene senkrecht zur Spannachse voneinander beabstandet angeordnet sind.

Der zwischen dem Spannkopf und der Anschlussaufnahme angeordnete Anschluss ist somit durch Bewegen der Gleitschiene entlang der Gleitschienenführung mit dem Prüfadapter und der Anschlussaufnahme in Kontakt bringbar. Durch anschließendes Bewegen des Prüfadapters mittels der Spannvorrichtung entlang der Spannachse weiter in Richtung des Anschlusses verkantet die Gleitschiene durch ein Verdrehen relativ zur Spannachse in der Gleitschienenführung und ist somit gegenüber dem Grundkörper fixiert, sodass der Anschluss zwischen Prüfadapter und Anschlussaufnahme eingespannt ist.

Durch das synergetische Zusammenspiel der erfindungsgemäßen Merkmale kann ein Prüfstand realisiert werden, bei dem die zu prüfende Leitung einfach, schnell, zuverlässig und sicher eingebaut, geprüft und wieder ausgebaut werden kann.

Die Erfindung ermöglicht es, dass ein zwischen der Anschlussaufnahme und dem Prüfadapter des Schnellspannkopfs angeordneter Anschluss einer zu prüfenden Leitung schnell und einfach eingespannt und dicht mit dem Prüfadapter verschlossen werden kann, um die Leitung anschließend mit einem Prüffluid zu befüllen und zu prüfen.

Das Einspannen des Anschlusses erfolgt dabei in zwei Schritten:
Zu Beginn des Einspannvorgangs ist der Anschluss der zu prüfenden Leitung zwischen der Anschlussaufnahme und dem Spannkopf angeordnet, steht aber mit keinem von beiden in direktem Kontakt.

In einem ersten Schritt der Grobzustellung verschiebt der Nutzer nun manuell den Gleitarm mit der Anschlussaufnahme so weit in Richtung Spannkopf, bis der Anschluss sowohl mit der Anschlussaufnahme als auch mit dem Prüfadapter des Spannkopfs in Kontakt steht. Dabei wird die Gleitschiene des Gleitarms innerhalb der Gleitschienenführung des Grundkörpers parallel zur Spannachse bewegt.

Anschließend erfolgt im zweiten Schritt das abdichtende Verspannen des Anschlusses zwischen der Anschlussaufnahme und dem Prüfadapter. Hierzu wird die Spannvorrichtung betätigt, sodass sich der Prüfadapter parallel zur Spannachse weiter in Richtung des Anschlussaufnahme bzw. in Richtung Prüfadapter bewegt. Dadurch wird eine Anklemmkraft vom Prüfadapter auf den Anschluss und die Anschlussaufnahme ausgeübt. Da der Prüfadapter und die Gleitschiene in Richtung senkrecht zur Spannachse versetzt zueinander angeordnet sind, wird die Anklemmkraft parallel versetzt zur Gleitschiene in den Gleitarm eingeleitet, wodurch bewirkt wird, dass sich die Gleitschiene relativ zur Spannachse ein wenig verdreht und sich in der Gleitschienenführung selbsthemmend verkantet, sodass die Gleitschiene im Ergebnis im Grundkörper fixiert wird und nicht (mehr) parallel zur Spannachse in der Gleitschienenführung verschoben werden kann.

Durch diese erfindungsgemäße Kombination aus schneller Grobzustellung und abdichtender Verspannung mit hoher Anklemmkraft kann ein gleichermaßen schnelles wie zuverlässiges Einspannen des Anschlusses realisiert werden.

Um den eingespannten Anschluss wieder aus dem Prüfstand zu entnehmen, wird zunächst die Spannvorrichtung in entgegengesetzter Richtung betätigt, sodass der Prüfadapter vom Anschluss abhebt und keine Anklemmkraft mehr übertragen wird. Daraufhin löst sich die selbsthemmende Verkantung der Gleitschiene in der Gleitschienenführung auf und der Gleitarm kann nun durch den Nutzer wieder manuell vom Prüfadapter wegbewegt werden. Der Anschluss der Leitung kann dann aus der Einspannvorrichtung entnommen werden. Nachfolgend werden einige Begriffe und Merkmale, die zur Beschreibung der Erfindung verwendet werden, näher definiert und erläutert:
Eine Leitung umfasst typischerweise einen Schlauch oder ein Rohr und zwei an den Enden des Schlauchs bzw. Rohrs angebrachte Anschlüsse. Die Anschlüsse sind dabei oftmals mittels einer Radialpresse mit dem Schlauch bzw. dem Rohr verpresst. Die Anschlüsse weisen hierzu jeweils einen Anschlussnippel und eine Presshülse auf. Der Anschlussnippel wird teilweise in den Schlauch bzw. das Rohr eingeschoben, die Presshülse umschließt den Schlauch bzw. das Rohr im Bereich des eingeschobenen Anschlussnippels von außen. Wird nun durch eine Radialpresse der Durchmesser der Presshülse radial verkleinert, so wird der Schlauch bzw. das Rohr zwischen der Presshülse und dem Anschlussnippel verklemmt und somit dicht mit dem Anschluss verbunden. Die Leitung kann insbesondere als Hydraulikleitung, Pneumatikleitung oder Gasleitung ausgeführt sein.

Die Anschlussaufnahme umfasst beispielsweise eine Platte mit einer zwischen zwei gegenüberliegenden Klauenflanken angeordneten schlitzförmigen Ausnehmung, in die der Anschluss der zu prüfenden Leitung eingefädelt werden kann. Die lichte Weite der Ausnehmung (also der Abstand der beiden Klauenflanken) ist dabei so auf den Anschluss abgestimmt, dass sich der Anschluss mit einem Flanschabschnitt (zumindest in einer Richtung) gegen die Anschlussaufnahme abstützt und somit gegen die Anschlussaufnahme gepresst werden kann.

Gemäß einer bevorzugten Ausführungsform des erfindungsgemäßen Prüfstands lässt sich eine besonders einfache und robuste Spannvorrichtung realisieren, indem
- die Spannvorrichtung eine sich entlang der Spannachse erstreckende Spindel mit einem Außengewinde, eine im Grundkörper angeordnete korrespondierende Spindelaufnahme mit einem Innengewinde, und einen Griff zum Drehen (Betätigen) der Spindel umfasst, und
- die Spindel an ihrem der Anschlussaufnahme zugewandten Ende den Prüfadapter trägt und an ihrem anderen Ende der Griff angeordnet ist.

Die Spannvorrichtung lässt sich dabei manuell durch einen Nutzer betätigen (drehen), indem dieser mit einer Hand den Griff umfasst und relativ zum Grundkörper verdreht. Bedingt durch die ineinandergreifende Außengewinde-Innengewinde-Paarung bewirkt dieses Verdrehen der Spindel gleichzeitig eine Verlagerung der Spindel parallel zur Spannachse. Abhängig von der Drehrichtung wird die Spindel auf die Anschlussaufnahme zu- oder von dieser wegbewegt.

Alternativ kann ein erfindungsgemäßer Prüfstand realisiert werden, der ein besonders festes Einspannen des Anschlusses ermöglicht, indem
- die Spannvorrichtung als ein hydraulischer Kraftwandler ausgeführt ist,
- der hydraulische Kraftwandler eine Antriebseinrichtung, einen Eingangskolben und einen den Prüfadapter tragenden Ausgangskolben umfasst,
- der Eingangskolben und der Ausgangskolben jeweils axial entlang ihrer Kolbenachsen beweglich im Grundkörper geführt sind und mittels eines Hydraulikfluids hydraulisch miteinander kommunizieren, und
- sich durch Betätigung der Antriebseinrichtung der Eingangskolben gegenüber dem Grundkörper bewegt, was mittels des Hydraulikfluids eine Bewegung des Ausgangskolbens sowie des Prüfadapters parallel zur Spannachse bewirkt.

Der Eingangskolben und der Ausgangskolben bewegen sich jeweils in einem mit dem Hydraulikfluid befüllten Zylinderraum. Dringt einer der Kolben weiter in den jeweiligen Zylinderraum ein, wird dadurch das entsprechende Volumen an Hydraulikfluid verdrängt. Die beiden Kolben können sich dabei in einem gemeinsamen Zylinderraum oder in zwei separaten Zylinderräumen, die fluidisch miteinander verbunden sind, bewegen. Zwei Zylinderräume sind dabei fluidisch miteinander verbunden, wenn ein Fluid bei gewissen Betriebssituationen bzw. Ventilstellungen von einem Zylinderraum in den anderen Zylinderraum strömen kann.

Die Formulierung, dass der Eingangskolben und der Ausgangskolben mittels des Hydraulikfluids hydraulisch miteinander kommunizieren, bringt zum Ausdruck, dass ein Einschieben eines Kolbens in den jeweiligen Zylinderraum dazu führt, dass der andere Kolben entsprechend dem dabei verdrängten Hydraulikflüssigkeitsvolumen aus dem jeweiligen Zylinderraum herausgedrückt wird. Beide Kolben sind auf diese Weise hydraulisch miteinander gekoppelt.

Wird die Antriebseinrichtung derart betätigt, dass sich der Eingangskolben (axial entlang seiner Kolbenachse) gegenüber dem Grundkörper bewegt und dabei weiter in den zugehörigen Zylinderraum eindringt, so wird dadurch ein gewisses Hydraulikfluidvolumen verdrängt. Wegen der hydraulischen Kopplung der beiden Kolben (hydraulisches Kommunizieren) wird dadurch eine dem verdrängten Volumen entsprechende axiale Verschiebung des Ausgangskolbens aus dem zugehörigen Zylinderraum heraus bewirkt. Der Ausgangskolben wirkt auf dem Prüfadapter ein und verschiebt diesen auf diese Weise ebenfalls in axialer Richtung (bezogen auf die Kolbenachse des Ausgangskolbens), sodass ein zwischen der Anschlussaufnahme und dem Prüfadapter angeordneter Anschluss dort verklemmt bzw. verspannt wird.

Die auf den Eingangskolben wirkende Betätigungskraft wird dabei durch Betätigung der Antriebseinrichtung ausgeübt. Die Antriebseinrichtung kann manuell oder maschinell betätigbar sein und dabei insbesondere mittels eines Hebelmechanismus oder eines Spindelmechanismus auf den Eingangskolben einwirken. Die Antriebseinrichtung ist somit dazu eingerichtet, den Eingangskolben entlang seiner Kolbenachse zu bewegen.

Dabei ist es besonders vorteilhaft, wenn
- der Eingangskolben eine Eingangskolbenquerschnittsfläche aufweist, und
- der Ausgangskolben eine Ausgangskolbenquerschnittfläche aufweist, die größer ist als die
   Eingangskolbenquerschnittsfläche.

Weist der Eingangskolben also eine kleinere Querschnittsfläche als der Ausgangskolben auf, kann erreicht werden, dass eine auf den Eingangskolben wirkende Betätigungskraft durch den Kraftwandler in eine größere Ausgangskraft gewandelt wird, die über den Ausgangskolben auf den Prüfadapter übertragen werden kann. Ist beispielsweise die Ausgangskolbenquerschnittsfläche 10-mal so groß wie die Eingangskolbenquerschnittsfläche, so ließe sich auf diese Weise die Betätigungskraft in eine 10-mal so große Ausgangskraft wandeln.

Unter einer Kolbenquerschnittsfläche wird vorliegend die Fläche der hydraulikffluidseitigen Stirnseite eines Kolbens verstanden.

Weiterhin lässt sich ein besonders kompakter hydraulischer Kraftwandler realisieren, wenn
- wobei der Eingangskolben und der Ausgangskolben jeweils zumindest teilweise in einen gemeinsamen, mit dem Hydraulikfluid befüllten Zylinderraum hineinragen, und/oder
- der Ausgangskolben mittels einer Rückstellvorrichtung, die insbesondere als Rückstellfeder ausgeführt ist, rückstellbar ist.

Gemäß einer weiteren vorteilhaften Ausführungsform der Erfindung ist vorgesehen, dass ein Abschnitt des Eingangskolbens ein Außengewinde und der Grundkörper ein korrespondierendes Innengewinde aufweist, sodass durch Drehen des Eingangskolbens gegenüber dem Grundkörper der Eingangskolben linear entlang der Spannachse verschiebbar ist.

Dabei kann weiterhin vorgesehen sein, dass die Antriebseinrichtung des Eingangskolbens
- eine insbesondere als Griff oder Hebelmechanismus ausgeführte manuell betätigbare Antriebseinrichtung, und/oder
- eine maschinelle Antriebseinrichtung aufweist.

Gemäß einer weiteren vorteilhaften Ausführungsform der Erfindung ist eine besonders einfache und gleichermaßen robuste Anschlussaufnahme realisierbar, indem die Anschlussaufnahme zwei gegenüberliegende Klauenflanken und eine sich dazwischen erstreckende schlitzförmige Ausnehmung aufweist, in die der Anschluss der zu prüfenden Leitung aufnehmbar ist.

Eine weitere besonders vorteilhafte Ausführungsform der Erfindung zeichnet sich dadurch aus, dass der Prüfadapter
- konisch ausgeführt ist,
- einen in seiner der Anschlussaufnahme zugewandten Stirnfläche mündenden Prüffluidkanal aufweist, und/oder
- lösbar am Ausgangskolben oder an der Spindel befestigt ist.

Ein konisch ausgeführter Prüfadapter kann aufgrund seiner Form mit Anschlüssen unterschiedlicher Innendurchmesser dicht verbunden werden. Ein und derselbe Prüfadapter kann somit verwendet werden, um verschiedene Leitungstypen mit unterschiedlichen Anschlüssen zu prüfen, wodurch sich Umrüstzeiten minimieren lassen.

Über die in seiner der Anschlussaufnahme zugewandten Stirnfläche mündende Prüfleitung kann eine zu prüfende Leitung mit einem Prüffluid beaufschlagt werden.

Mit der Formulierung, dass der Prüfadapter lösbar am Ausgangskolben befestigt ist, kommt zum Ausdruck, dass der Prüfadapter einfach ausgetauscht und durch einen anderen Prüfadapter gewechselt werden kann. Da der Prüfadapter üblicherweise auf den Typ der zu testenden Hydraulikleitung abgestimmt werden muss, ist es vorteilhaft, wenn der Prüfadapter schnell und einfach ausgetauscht werden kann, wenn in kurzer Zeit verschiedene Leitungstypen zu prüfen sind.

Gemäß einer weiteren bevorzugten Ausführungsform der Erfindung kann der Prüfadapter mittels eines Kugelgelenks an der Spannvorrichtung befestigt sein, um ein Klaffen von Undichtigkeiten zwischen dem Prüfadapter und dem Anschluss der zu prüfenden Leitung zu verhindern, wenn die Anschlussaufnahme beim Einspannen des Anschlusses zwischen der Anschlussaufnahme und dem Spannkopf etwas nachgibt und sich somit verdreht bzw. verbiegt.

Um das Verkanten der Gleitschiene in der Gleitschienenführung weiter zu befördern und damit eine noch zuverlässigere Fixierung der Gleitschiene in der Gleitschienenführung zu ermöglichen, weist die Gleitschiene (an ihrer Oberfläche) Riffelungen auf.

Riffelungen sind dabei typischerweise senkrecht zur Spannachse verlaufende Vertiefungen oder Erhebungen, die entlang der Oberfläche der Gleitschiene angeordnet sind.

Nachfolgend werden zwei Ausführungsbeispiele des erfindungsgemäßen Prüfstands anhand der Zeichnungen näher erläutert. Dabei zeigt
- Fig. 1: eine schematische Seitenansicht einer erstes Ausführungsbeispiel eines erfindungsgemäßen Prüfstands,
- Fig. 2: die Schnellspanneinheit des ersten Ausführungsbeispiels in einer vergrößerten, schematischen Schnittansicht, und
- Fig. 3: eine Schnellspanneinheit eines zweiten Ausführungsbeispiels des erfindungsgemäßen Prüfstands in einer vergrößerten, schematischen Schnittansicht.

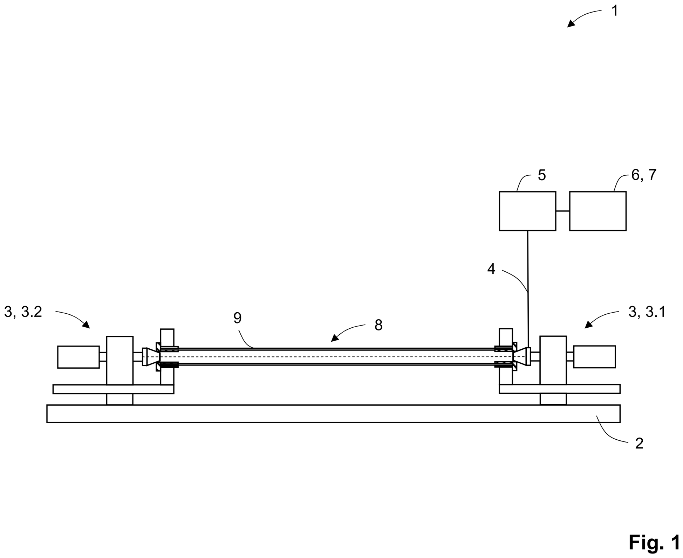

Das in Fig. 1 dargestellte erste Ausführungsbeispiel eines erfindungsgemäßen Prüfstands 1 umfasst einen Prüfstandsrahmen 2, zwei Schnellspanneinheiten 3, eine Prüffluidleitung 4, ein Befüll- und Druckerzeugungsaggregat 5 sowie ein Steuergerät 6 mit einer Anzeigeeinheit 7.

Mittels der beiden Schnellspanneinheiten 3 kann eine als Hydraulikleitung ausgeführte Leitung 8 mit einem (Hydraulik- )Schlauch 9 und an dessen Enden angebrachten Anschlüssen 10 fluidisch dicht im Prüfstand 1 fixiert werden.

Die Prüffluidleitung 4 verbindet das Befüll- und
Druckerzeugungsaggregat 5 mit einer der beiden Schnellspanneinheiten 3, nachfolgend Befüll-Schnellspanneinheit 3.1 genannt. Über die Befüll-Schnellspanneinheit 3.1 kann Prüffluid in die zu prüfende Hydraulikleitung 8 geleitet werden. Die der Befüll-Schnellspanneinheit 3.1 gegenüberliegende Schnellspanneinheit 3, nachfolgend Verschluss-Schnellspanneinheit 3.2 genannt, verschließt die Hydraulikleitung 8 am ihrem gegenüberliegenden Ende.

Das Befüll- und Druckerzeugungsaggregat 5 kann vom Steuergerät 6 derart betätigt werden, dass ein Prüffluid durch die Prüffluidleitung 4 über die Befüll-Schnellspanneinheit 3.1 in die zu prüfenden Hydraulikleitung 8 gefördert wird.

Das Steuergerät 6 weist einer Nutzerschnittstelle auf, über die der Prüfdruck vorgegeben und/oder der Prüfvorgang gestartet werden kann. Über die Anzeigeeinheit 7 kann insbesondere der in der Hydraulikleitung 8 anliegende Druck angezeigt werden.

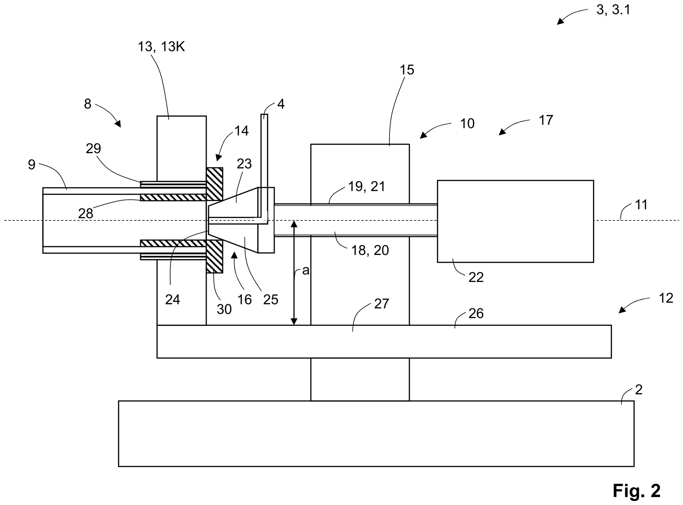

Mit Blick auf Fig. 2 wird nachfolgend der Aufbau der Befüll-Schnellspanneinheit 3, 3.1 des ersten Ausführungsbeispiels näher beleuchtet.

Die Befüll-Schnellspanneinheit 3, 3.1 umfasst einen Spannkopf 10 und einen gegenüber entlang einer Spannachse 11 verschiebbaren Gleitarm 12 mit einer Anschlussaufnahme 13. Zwischen der Anschlussaufnahme 13 und dem Spannkopf 10 ist ein Anschluss 14 der zur prüfenden Hydraulikleitung 8 eingespannt.

Der Spannkopf 10 weist einen am Prüfstandsrahmen 2 fixierten Grundkörper 15, einen Prüfadapter 16 und eine Spannvorrichtung 17 auf, durch deren Betätigung der Prüfadapter 16 gegenüber dem Grundkörper 15 parallel zur Spannachse 11 bewegt werden kann.

Die Spannvorrichtung 17 umfasst eine sich entlang der Spannachse 11 erstreckende Spindel 18 mit einem Außengewinde 19, eine im Grundkörper 15 angeordnete korrespondierende Spindelaufnahme 20 mit einem Innengewinde 21, und einen Griff 22 zum Drehen (Betätigen) der Spindel 18. An ihrem der Anschlussaufnahme 13 zugewandten Ende trägt die Spindel 18 den Prüfadapter 16, an ihrem anderen Ende ist der Griff 22 angeordnet.

Der Prüfadapter 16 ist auswechselbar an der Spindel 18 befestigt und umfasst einen konischen Abschnitt 23, der sich zu einer Stirnfläche 24 verjüngt, die der Anschlussaufnahme 13 zugewandt ist. Durch den Prüfadapter 16 hindurch erstreckt sich ein Prüffluidkanal 25, der einerseits in der Stirnfläche 24 und andererseits in der Prüffluidleitung 4 mündet. Prüffluid kann durch den Prüffluidkanal 25 in die Hydraulikleitung 8 strömen, um diese mit einem Prüfdruck zu beaufschlagen.

Im in Fig. 2 dargestellten eingespannten Zustand ragt der konische Abschnitt 23 des Prüfadapters 16 teilweise in den Anschluss 14 der Hydraulikleitung 8 hinein und wird durch die von der Spindel 18 auf den Prüfadapter 16 wirkende Anklemmkraft unter Ausbildung einer dichten Verbindung gegen den Anschluss 14 gespannt.

Die Verschluss-Schnellspannvorrichtung 3, 3.2 ist im Wesentlichen genauso aufgebaut wie die in Fig. 2 dargestellte Befüll-Spanneinrichtung 3, 3.1, weist allerdings keinen Prüffluidkanal 25 auf.

Der Gleitarm 12 umfasst eine geriffelte Gleitschiene 26, die sich parallel zur Spannachse 11 erstreckt und in einer korrespondierenden Gleitschienenführung 27 des Grundkörpers 15 geführt ist. Zwischen dem Prüfadapter 16 und der Gleitschiene 26 erstreckt sich senkrecht zur Spannachse 11 ein Abstand a.

Die Anschlussaufnahme 13 weist zwei gegenüberliegenden Klauenflanken 13K auf, zwischen denen sich eine schlitzförmige Ausnehmung erstreckt, in die einer der beiden Anschlüsse 14 der zu prüfenden Hydraulikleitung 8 aufgenommen ist.

Der in Fig. 2 dargestellte Anschluss 14 umfasst einen Anschlussnippel 28 und eine Presshülse 29. Der Anschlussnippel 28 ist bis zu einem Anschlussflansch 30 in den Hydraulikschlauch 9 eingeschoben. Die Presshülse 29 umschließt den Hydraulikschlauch 9 im Bereich des eingeschobenen Anschlussnippels 28 von außen. Die Presshülse 29, der Hydraulikschlauch 9 und der Anschlussnippel 28 wurden mittels einer Radialpresse fluidisch dicht miteinander verpresst.

Der Anschlussflansch 30 des Anschlusses 14 stützt sich an der Anschlussaufnahme 13 ab, sodass der Anschluss 14 nicht weiter in axialer Richtung vom Spannkopf 10 weg (also nach links bezogen auf Fig. 2) verschoben werden kann. Der Anschlussflansch 30 des Anschlusses 14 ist zwischen der Anschlussaufnahme 13 und dem Prüfadapter 16 verspannt (eingeklemmt).

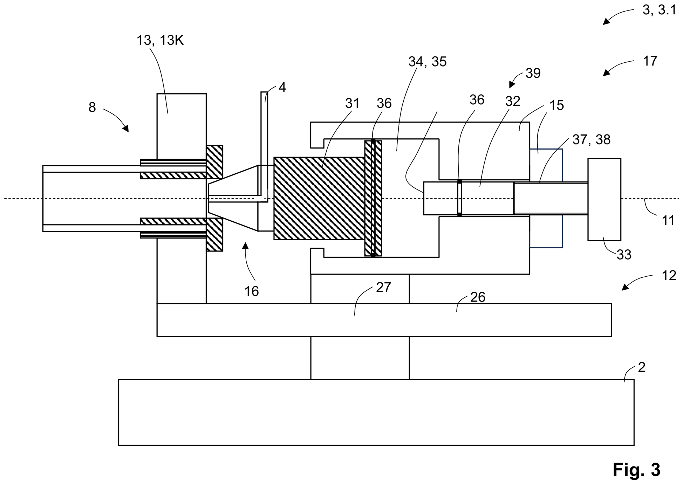

Fig. 3 zeigt eine Befüll-Schnellspanneinheit 3, 3.1 eines zweiten Ausführungsbeispiels des erfindungsgemäßen Prüfstands 1, die sich von der Befüll-Schnellspanneinheit 3, 3.1 gemäß Fig. 2 im Wesentlichen durch die Ausgestaltung der Spannvorrichtung 17 unterscheidet. Vor diesem Hintergrund wird nachfolgend nur auf die Unterschiede zwischen beiden Ausführungsbeispielen eingegangen. Gleichartige bzw. identische Komponenten sind in beiden Ausführungsbeispielen mit identischen Bezugszeichen versehen.

Die Spannvorrichtung 17 des zweiten Ausführungsbeispiels umfasst einen den Prüfadapter 16 tragenden Ausgangskolben 31, einen Eingangskolben 32 und eine am Eingangskolben 31 angreifende, als Griff ausgeführte Antriebseinrichtung 33. Der Prüfadapter 16 ist auswechselbar am Ausgangskolben 31 befestigt.

Im Grundkörper 15 ist ein mit einem Hydraulikfluid 34 gefüllter Zylinderraum 35 ausgebildet, in den der Ausgangskolben 31 und der Eingangskolben 32 zumindest teilweise hineinragen. Beide Kolben 31, 32 sind axial entlang ihrer jeweiligen Kolbenachsen (die parallel zur Spannachse 11 verlaufen) beweglich im Grundkörper 15 geführt und jeweils mittels eines Dichtrings 36 gegenüber dem Grundkörper 15 abgedichtet. Die Kolben 31, 32 können auf diese Weise weiter in den Zylinderraum 35 hinein und aus ihm herausgeschoben werden. Über das im Zylinderraum 35 befindliche Hydraulikfluid 34 kommunizieren der Eingangskolben 32 und der Ausgangskolben 31 hydraulisch miteinander, mit anderen Worten, die beiden Kolben 31, 32 sind hydraulisch miteinander gekoppelt.

Der Eingangskolben 32 erstreckt sich entlang seiner Kolbenachse, ist zylindrisch ausgeführt und weist eine kreisförmige Eingangskolbenquerschnittsfläche auf. Ein Abschnitt des Eingangskolbens 32 weist ein Außengewinde 37 auf, welches mit einem Innengewinde 38 in einem Bereich des Grundkörpers 15 korrespondiert. Durch Drehen des Griffs, also durch Betätigung der Antriebseinrichtung 33, kann der Eingangskolben 32 weiter in den Grundkörper 15 und damit in den Zylinderraum 35 hinein- bzw. aus diesem herausgeschraubt werden. Der Eingangskolben 32 wird dabei axial (entlang seiner Kolbenachse) gegenüber dem Grundkörper 15 bewegt.

Wird der Eingangskolben 32 auf diese Weise weiter in den Zylinderraum 35 hineingeschraubt, bewirkt das dabei verdrängte Hydraulikfluid 34, dass der Ausgangskolben 31 dem verdrängten Volumen entsprechend durch eine Ausgangskraft aus dem Zylinderraum 35 herausgeschoben wird. Der Eingangskolben 32, der Ausgangskolben 31 und die Antriebseinrichtung 33 sind Teil eines hydraulischen Kraftwandlers 39.

Der Ausgangskolben 31 erstreckt sich entlang seiner Kolbenachse, ist zylindrisch ausgeführt und weist eine kreisförmige Ausgangskolbenquerschnittsfläche auf, die größer ist als die Eingangskolbenquerschnittsfläche. Der Ausgangskolben 31 ist mittels einer (nicht dargestellten) als Rückstellfeder ausgeführten Rückstellvorrichtung rückstellbar. Beim Rückstellen wird der Ausgangskolben 31 von der Rückstellfeder wieder weiter in den Zylinderraum 35 hineingeschoben.

**Bezugszeichenliste**

| | |
|---|---|
| Prüfstand | 1 |
| Prüfstandsrahmen | 2 |
| Schnellspanneinheiten | 3 |
| Befüll-Schnellspanneinheit | 3.1 |
| Verschluss-Schnellspanneinheit | 3.2 |
| Prüffluidleitung | 4 |
| Befüll- und Druckerzeugungsaggregat | 5 |
| Steuergerät | 6 |
| Anzeigeeinheit | 7 |
| (Hydraulik-)Leitung | 8 |
| (Hydraulik-)Schlauch | 9 |
| Spannkopf | 10 |
| Spannachse | 11 |
| Gleitarm | 12 |
| Anschlussaufnahme | 13 |
| Klauenflanken | 13K |
| Anschluss | 14 |
| Grundkörper | 15 |
| Prüfadapter | 16 |
| Spannvorrichtung | 17 |
| Spindel | 18 |
| Außengewinde | 19 |
| Spindelaufnahme | 20 |
| Innengewinde | 21 |
| Griff | 22 |
| konischen Abschnitt | 23 |
| Stirnfläche | 24 |
| Prüffluidkanal | 25 |
| Gleitschiene | 26 |
| Gleitschienenführung | 27 |
| Anschlussnippel | 28 |
| Presshülse | 29 |
| Anschlussflansch | 30 |
| Ausgangskolben | 31 |
| Eingangskolben | 32 |
| Antriebseinrichtung | 33 |
| Hydraulikfluid | 34 |
| Zylinderraum | 35 |
| Dichtring | 36 |
| Außengewinde | 37 |
| Innengewinde | 38 |
| hydraulischer Kraftwandlers | 39 |
| Abstand | a |

## Patentansprüche

1. Prüfstand (1) mit einer Schnellspanneinheit (3, 3.1, 3.2) zur Druckprüfung einer Leitung (8), insbesondere einer Hydraulikleitung, wobei
- die Schnellspanneinheit (3) einen Spannkopf (10) und einen gegenüber dem Spannkopf (10) entlang einer Spannachse (11) verschiebbaren Gleitarm (12) mit einer Anschlussaufnahme (13) umfasst, sodass ein Anschluss (14) der zu prüfenden Leitung (8) zwischen dem Spannkopf (10) und der Anschlussaufnahme (13) einspannbar ist,
- der Spannkopf (10) einen Grundkörper (15), einen Prüfadapter (16) und eine Spannvorrichtung (17) aufweist, durch deren Betätigung der Prüfadapter (16) gegenüber dem Grundkörper (15) parallel zur Spannachse (11) bewegbar ist,
- der Gleitarm (12) eine Gleitschiene (26) aufweist, die einerseits innerhalb einer korrespondierenden Gleitschienenführung (27) des Grundkörpers (15) entlang der Spannachse (11) bewegbar ist, und die andererseits durch Verdrehung relativ zur Spannachse (11) in der Gleitschienenführung (27) verkantbar und somit gegenüber dem Grundkörper (15) fixierbar ist, und
- der Prüfadapter (16) und die Gleitschiene (26) senkrecht zur Spannachse (11) voneinander beabstandet angeordnet sind.

2. Prüfstand (1) nach Anspruch 1, wobei
- die Spannvorrichtung (17) eine sich entlang der Spannachse (11) erstreckende Spindel (18) mit einem Außengewinde (19), eine im Grundkörper (15) angeordnete korrespondierende Spindelaufnahme (20) mit einem Innengewinde (21), und einen Griff (22) zum Drehen der Spindel (18) umfasst, und
- die Spindel (18) an ihrem der Anschlussaufnahme (13) zugewandten Ende den Prüfadapter (16) trägt und an ihrem anderen Ende der Griff (22) angeordnet ist.

3. Prüfstand (1) nach Anspruch 1, wobei
- die Spannvorrichtung (17) als ein hydraulischer Kraftwandler (39) ausgeführt ist,
- der hydraulische Kraftwandler (39) eine Antriebseinrichtung (33), einen Eingangskolben (32) und einen den Prüfadapter (16) tragenden Ausgangskolben (31) umfasst,
- der Eingangskolben (32) und der Ausgangskolben (31) jeweils axial entlang ihrer Kolbenachsen beweglich im Grundkörper (15) geführt sind und mittels eines Hydraulikfluids (34) hydraulisch miteinander kommunizieren, und
- sich durch Betätigung der Antriebseinrichtung (33) der Eingangskolben (32) gegenüber dem Grundkörper (15) bewegt, was mittels des Hydraulikfluids (34) eine Bewegung des Ausgangskolbens (31) sowie des Prüfadapters (16) parallel zur Spannachse (11) bewirkt.

4. Prüfstand (1) nach Anspruch 3, wobei
- der Eingangskolben (32) eine
Eingangskolbenquerschnittsfläche aufweist, und
- der Ausgangskolben (31) eine
Ausgangskolbenquerschnittfläche aufweist, die größer ist als die Eingangskolbenquerschnittsfläche.

5. Prüfstand (1) nach einem der Ansprüche 3 oder 4, wobei
- wobei der Eingangskolben (32) und der Ausgangskolben (31) jeweils zumindest teilweise in einen gemeinsamen, mit dem Hydraulikfluid (34) befüllten Zylinderraum (35) hineinragen, und/oder
- der Ausgangskolben (31) mittels einer Rückstellvorrichtung, die insbesondere als Rückstellfeder ausgeführt ist, rückstellbar ist.

6. Prüfstand (1) nach einem der Ansprüche 3 bis 5, wobei ein Abschnitt des Eingangskolbens (32) ein Außengewinde (37) und der Grundkörper (15) ein korrespondierendes Innengewinde (38) aufweist, sodass durch Drehen des Eingangskolbens (32) gegenüber dem Grundkörper (15) der Eingangskolben (32) linear entlang der Spannachse (11) verschiebbar ist.

7. Prüfstand (1) nach einem der Ansprüche 3 bis 6, wobei die Antriebseinrichtung (33) des Eingangskolbens (32)
- eine insbesondere als Griff oder Hebelmechanismus ausgeführte manuell betätigbare Antriebseinrichtung (33), und/oder
- eine maschinelle Antriebseinrichtung (33) aufweist.

8. Prüfstand (1) nach einem der voranstehenden Ansprüche, wobei die Anschlussaufnahme (13) zwei gegenüberliegende Klauenflanken (13K) und eine sich dazwischen erstreckende schlitzförmige Ausnehmung aufweist, in die der Anschluss (14) der zu prüfenden Leitung (8) aufnehmbar ist.

9. Prüfstand (1) nach einem der voranstehenden Ansprüche, wobei der Prüfadapter (16)
- konisch ausgeführt ist,
- einen in seiner der Anschlussaufnahme (13) zugewandten Stirnfläche (24) mündenden Prüffluidkanal (25) aufweist, und/oder
- lösbar am Ausgangskolben (31)oder an der Spindel (18) befestigt ist.

10. Prüfstand (1) nach einem der voranstehenden Ansprüche, wobei die Gleitschiene (26) Riffelungen aufweist.
